# EUROPÄISCHE PATENTSCHRIFT

(11) **EP 0 967 043 B1**
(45) Veröffentlichungstag und Bekanntmachung des Hinweises auf die Patenterteilung: **21.01.2004**
(21) Anmeldenummer: 99111463.8
(22) Anmeldetag: 12.06.1999
(51) Int. Cl.: B23K 9/028, B23K 9/00

(54) **Verfahren zur Herstellung eines Rohrgestelles für Möbel**
Tubular frame manufacturing method for furniture purpose
Méthode de fabrication d'une structure tubulaire pour meubles

(30) Priorität: 23.06.1998 DE 19827768
(43) Veröffentlichungstag der Anmeldung: 29.12.1999
(73) Patentinhaber: Sedus Stoll AG, 79761 Waldshut-Tiengen (DE)
(72) Erfinder: Kläsener, Michael, 79761 Waldshut (DE); Hergesell, Harald, 79733 Görwihl (DE)
(74) Vertreter: Pöpper, Evamaria, Dr.

(56) Entgegenhaltungen:
- EP-A- 0 811 454
- US-A- 3 999 802
- US-A- 4 109 330

## Beschreibung

### Technisches Gebiet

Die Erfindung bezieht sich auf das Gebiet der Möbelindustrie. Sie betrifft ein Verfahren zur Herstellung eines aus mindestens einem schweißbaren Rohr bestehenden geschlossenen Rohrgestelles für Möbel, insbesonder Sitzmöbel, wobei das Rohr/die Rohre in einem ersten Verfahrensschritt so verformt wird/werden, daß die gewünschte Endform des Rohrgestelles gebildet wird, in einem zweiten Verfahrensschritt die beiden jeweils aneinandergrenzenden noch offenen Enden des Rohres/der Rohre miteinander verschweißt werden und in einem dritten Verfahrensschritt das Rohrgestell oberflächenbehandelt wird.

### Stand der Technik

Bei den bekannten Verfahren zur Herstellung derartiger Rohrgestelle werden bisher Schweißverfahren eingesetzt, die vor der abschließenden Oberflächenbehandlung, beispielsweise Lackierung oder Verchromung, des geschlossenen Rohrgestelles eine Bearbeitung der Schweißnähte notwendig machen.

Wird z. B. zum Verbinden der Rohrenden eine Elektroschweißung per Hand ausgeführt, so ist die neben dem hohen Zeitaufwand zur Herstellung der Rundschweißnaht als weiterer Nachteil die mangelnde Qualität der Schweißnaht zu nennen, die sich wegen der Handführung der Elektrode nur unwesentlich verbessem läßt. Damit bei der Oberflächenbehandlung des Rohrgestelles eine einwandfreie Oberfläche entsteht, muß daher diese Schweißnaht vorher abgeschliffen werden.

Eine Verbesserung wird zwar durch den bekannten Einsatz der Schweißrobotertechnik zur Erzeugung der Rundschweißnaht erreicht, das Problem wird aber damit keinesfalls gelöst. Mit den bekannten Schweißrobotem ist nur eine Schweißung der Rohre um 180° möglich, danach muß das Werkstück gedreht und die zweite Hälfte der Naht geschweißt werden. Beim Neuansatz der Naht entstehen Unebenheiten. Außerdem führt auch die hin- und hergehende Bewegung der Elektrode dazu, daß keine glatte Oberfläche der Schweißnaht entsteht. Daher ist es auch beim bisher bekannten Einsatz der Schweißrobotertechnik zur Herstellung eines Möbelrohrgestelles notwendig, die Schweißnaht vor dem Auftragen der endgültigen Oberfläche auf das Rohrgestell zu glätten. Das führt nachteilig zu einem erhöhten Zeit- und Fertigungsaufwand.

Zum Verschweißen von Rohren, Bogen und Formteilen in der Bauindustrie sind Rundschweißverfahren (Orbitalschweißverfahren) bekannt, die beispielsweise im Firmenprospekt "Orbitalschweißverfahren" der Fa. Tesch GmbH, Hamburg beschrieben sind. Die mit diesem Schweißverfahren hergestellten Schweißnähte zeichnen sich durch eine besonders gute Qualität und Reproduzierbarkeit aus. Eine Innenspanneinrichtung dient dem Zentrieren und Ausrichten, Spannen und Firmieren der Rohre. Das zu verschweißende Werkstück ist beim Schweißvorgang feststehend, während der Brenner umlaufend ist. Die Elektrode ist bahngesteuert und legt beim Schweißen in einem Zuge eine Bahn von 360° zurück, so daß der Endpunkt einer Bahn mit dem Ansatzpunkt einer Bahn zusammenfällt. Die Verschweißung der Werkstücke erfolgt je nach Anforderungen mit oder ohne Zuführung von Zusatzmaterial.

Eine Anwendung dieser aus dem Stand der Technik bekannten Orbitalschweißverfahren zur Herstellung von Möbelrohrgestellen ist der Anmelderin nicht bekannt.

### Darstellung der Erfindung

Die Erfindung versucht, die beschriebenen Nachteile des Standes der Technik zu vermeiden. Ihr liegt die Aufgabe zugrunde, ein einfaches Verfahren zur Herstellung eines aus mindestens einem schweißbaren Rohr bestehenden geschlossenen Rohrgestelles für Möbel, insbesondere Sitzmöbel, vorzuschlagen, welches sich gegenüber dem bekannten Stand der Technik durch einen verringerten Zeitund Kostenaufwand auszeichnet.

Erfindungsgemäß wird dies dadurch erreicht, daß bei einem Verfahren gemäß Oberbegriff des Patentanspruches zum Verschweißen der Rohrenden ein automatisches Orbitalschweißverfahren höchster Präzision verwendet wird, bei welchem eine bahngesteuerte Elektrode eine 360°-Bahn durchläuft.

Die Vorteile der Erfindung bestehen darin, daß die Rundschweißnähte eine hohe Qualität aufweisen. Es kann ohne Zuführung von Zusatzmaterial geschweißt werden. Die Oberfläche der Schweißnaht ist so glatt, daß eine Nachbehandlung der Schweißnaht, z. B. Schleifen, entfällt. Das geschlossene Rohrgestell kann nun-mehr direkt nach dem Schweißvorgang oberflächenbehandelt werden. Somit verringern sich die Herstellungszeit und die Kosten.

### Kurze Beschreibung der Zeichnung

In der Zeichnung ist ein Ausführungsbeispiel der Erfindung dargestellt.

Es zeigen:
Fig. 1 eine schematische Ansicht eines noch nicht geschlossenen Rohrgestelles;
Fig. 2 ein vergrößertes Detail im Bereich der Schweißnaht.

Es sind nur die für das Verständnis der Erfindung wesentlichen Elemente gezeigt.

### Weg zur Ausführung der Erfindung

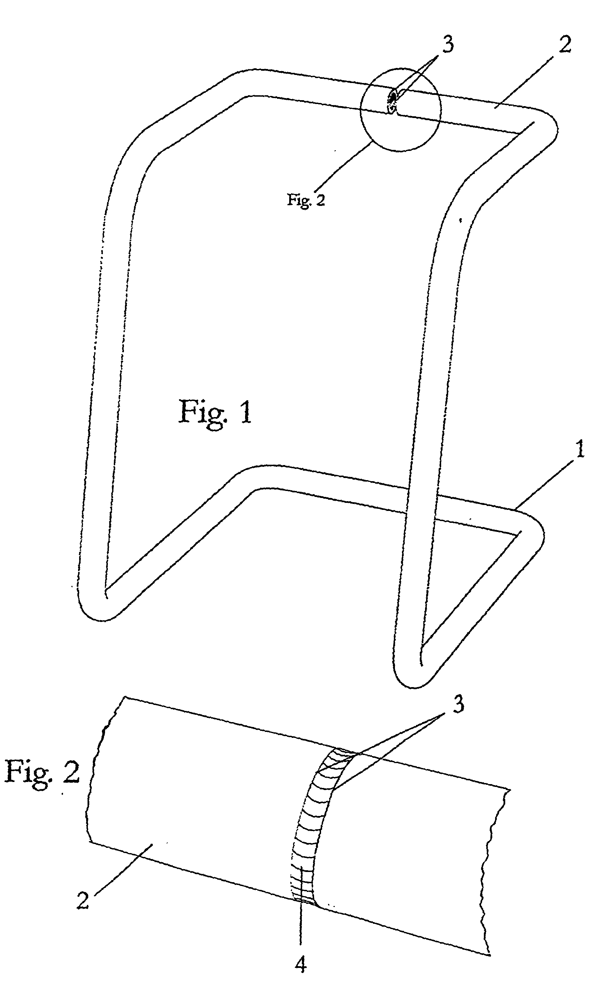

Nachfolgend wird die Erfindung eines Ausführungsbeispieles und der Figuren 1 und 2 näher erläutert.

Fig. 1 zeigt eine schematische Ansicht eines noch nicht geschlossenen Rohrgestelles 1 für ein Sitzmöbel. Das Rohrgestell 1 wird aus zwei Rohren 2 gebildet, die in einem ersten Verfahrenschritt in die Endform des Rohrgestelles 1 verformt werden. Die (noch) offenen Enden 3 der beiden Rohre 2 stehen sich gegenüber.

In einem zweiten Verfahrensschritt werden die aneinanderliegenden offenen Enden 3 der Rohre 2 miteinander verschweißt. Dazu werden sie zunächst mittels einer nicht dargestellten Spanneinrichtung gespannt und zueinander in die zum Schweißen richtige Position gebracht. Zum Verschweißen wird erfindungsgemäß ein Orbitalschweißverfahren höchster Präzision verwendet, beispielsweise das Orbitalschweißverfahren der Fa. Tesch, Hamburg, bei welchem die bahngesteuerten Elektroden eine geschlossene Kreisbahn von 360° abfahren. Beim Schweißvorgang ist es nicht notwendig, Zusatzmaterial zuzuführen. Durch das Verschweißen der beiden Rohre 2 entsteht ein geschlossenes Rohrgestell 1.

Fig. 2 zeigt ein vergrössertes Detail des verschweißten Rohrgestelles 1 im Bereich der Rundschweißnaht 4. Es ist gut zu erkennen, daß die Schweißnaht 4 aus nur sehr kleine Schweißraupen besteht und dadurch eine glatte Oberfläche gebildet wird. Die Qualität der Schweißnaht 4 ist so gut, daß vor der abschließenden Oberflächenbehandlung, z. B. Lackierung oder Verchromung, des Rohrgestelles kein Abschleifen mehr notwendig ist, d. h. daß bereits nach der Orbitalschweißung die Oberflächenbehandlung des Rohrgestelles durchgeführt werden kann. Durch Einsparung des Verfahrensschrittes - mechanische Bearbeitung der Schweißnaht 4 - können vorteilhaft Herstellungszeit und -kosten reduziert werden.

### Bezugszeichenliste

- 1: Rohrgestell
- 2: Rohr
- 3: Enden von Pos. 2
- 4: Rundschweißnaht

## Patentansprüche

1. Verfahren zur Herstellung eines aus mindestens einem schweißbaren Rohr (2) bestehenden geschlossenen Rohrgestelles (1) für Möbel, insbesondere Sitzmöbel, wobei das Rohr/die Rohre (2) in einem ersten Verfahrensschritt so verformt wird/werden, daß die gewünschte Endform des Rohrgestelles (1) gebildet wird, in einem zweiten Verfahrensschritt die beiden jeweils aneinandergrenzenden offenen Enden (3) des Rohres/der Rohre (2) miteinander verschweißt werden, und in einem dritten Verfahrensschritt das nunmehr geschlossene Rohrgestell (1) oberflächenbehandelt wird, **dadurch gekennzeichnet, daß** zum Verschweißen der Rohrenden (3) ein automatisches Orbitalschweißverfahren höchster Präzision verwendet wird, bei welchem eine bahngesteuerte Elektrode eine 360°-Bahn durchläuft.

## Claims

1. A method of manufacturing a closed tubular frame (1) for furniture, in particular, seats, consisting of at least one weldable tube (2), whereby the tube(s) (2) is/are deformed at the first stage so as to take the desired final shape of the tubular frame (1); at the second stage both adjacent opened ends (3) of the tube(s) (2) are welded together and, at the third stage, the surface treatment of the now closed tubular frame (1) is performed, **characterised by** the fact that automatic high precision orbital welding is used for welding tube ends (3), whereby an orbitally revolving electrode covers a 360° path.

## Revendications

1. Une méthode de fabrication d'une structure tubulaire fermée (1) pour meubles, sièges en particulier, constitué d'au moins un tube (2) soudé, le(s) tube(s) (2) étant déformé(s) lors d'une première étape de fabrication de façon à prendre l'aspect final désiré de la structure tubulaire (1) ; les deux bouts (3) ouverts respectivement conjoints du/des tube(s) (2) étant soudés ensemble lors d'une seconde étape de fabrication et le traitement de surface de la structure tubulaire (1) maintenant fermée ayant lieu lors de la troisième étape de fabrication, **caractérisée par** un procédé automatisé de soudage orbital de haute précision employé pour souder les bouts de tube (3) dans lequel une électrode installée sur orbite parcourt une trajectoire de 360°.
